# EUROPEAN PATENT SPECIFICATION

(11) **EP 4 445 713 B1**
(45) Date of publication and mention of the grant of the patent: **02.09.2026**
(21) Application number: 24159403.5
(22) Date of filing: 23.02.2024
(51) Int. Cl.: A01D 34/00

(54) **MOWING CONTROL METHOD AND ELECTRONIC DEVICE**
PROCÉDÉ DE COMMANDE DE TONTE ET DISPOSITIF ÉLECTRONIQUE
MÄHSTEUERUNGSVERFAHREN UND ELEKTRONISCHE VORRICHTUNG

(30) Priority: 14.04.2023 CN 202310395676
(43) Date of publication of application: 16.10.2024
(73) Proprietor: Willand (Beijing) Technology Co., Ltd., Beijing 100192 (CN)
(72) Inventor: FU, Jiayuan, Beijing, 100192 (CN); CHEN, Zichong, Beijing, 100192 (CN); ZHANG, Lin, Beijing, 100192 (CN)
(74) Representative: J A Kemp LLP

(56) References cited:
- CN-A- 115 061 471
- US-A1- 2003 023 356
- US-A1- 2021 076 562
- US-B1- 11 582 903
- US-B2- 11 269 349
- US-B2- 6 809 490
- US-B2- 9 420 741

## Description

### TECHNICAL FIELD

The present invention relates to the technical field of electronic devices and, in particular, to a mowing control method, a setting method, a lawn mower, a setting apparatus and an electronic device.

### BACKGROUND

With the continuous improvement of human living standards, the requirements for the environment and greening have been gradually improved, and lawn mowing devices that are becoming more and more intelligent have brought convenience for people to mow lawns.

An intelligent lawn mower refers to a lawn mower provided with a first sensor. For example, the first sensor is a visual apparatus, and the visual apparatus is a cbox. The visual apparatus can identify a grass area and a non-grass area. When encountering the grass area, the lawn mower may pass through the corresponding area and perform mowing, and when encountering the non-grass area, the lawn mower may avoid it. An ordinary lawn mower is not provided with a first sensor and will avoid obstacles only when colliding with the obstacles. Compared to the ordinary lawn mower, the mowing efficiency of the intelligent lawn mower is significantly improved. However, how to further improve the mowing efficiency of the intelligent lawn mower has been a problem that needs to be solved for the development of the lawn mower industry. Prior art document US 2021/076562A1 discusses a method of mowing with an autonomous robot lawnmower, and the method includes traversing a mowable area with the autonomous robot lawnmower carrying a cutter and a vegetation characteristic sensor.

### SUMMARY

The present invention is set out in the appended set of claims. The present invention provides a computer implemented mowing control method according to claim 1, an electronic device according to claim 14 and a computer-readable storage medium according to claim 15.

### BRIEF DESCRIPTION OF DRAWINGS

The accompanying drawings herein which are incorporated into and form a part of the specification, illustrate embodiments in accordance with the present invention, and are used in conjunction with the specification to explain the principles of the present invention.
FIG. 1 is a diagram of an application scenario of a mowing control method provided by an embodiment of the present invention.
FIG. 2 is a schematic flowchart of a mowing control method provided by an embodiment of the present invention.
FIG. 3 is a schematic diagram of walking of a lawn mower after an ineffective area is set up provided by an embodiment of the present invention.
FIG. 4 is a schematic flowchart of a setting method provided by an embodiment of the present invention.
FIG. 5 is a first schematic diagram of setting up an ineffective area provided by an embodiment of the present invention.
FIG. 6 is a second schematic diagram of setting up an ineffective area provided by an embodiment of the present invention.
FIG. 7 is a third schematic diagram of setting up an ineffective area provided by an embodiment of the present invention.
FIG. 8 is a fourth schematic diagram of setting up an ineffective area provided by an embodiment of the present invention.
FIG. 9 is a fifth schematic diagram of setting up an ineffective area provided by an embodiment of the present invention.
FIG. 10 is a sixth schematic diagram of setting up an ineffective area provided by an embodiment of the present invention.
FIG. 11 is a schematic structural diagram of a lawn mower provided by an embodiment of the present invention.
FIG. 12 is a schematic structural diagram of a setting apparatus provided by an embodiment of the present invention.
FIG. 13 is a schematic diagram of a hardware structure of an electronic device provided by an embodiment of the present invention.

Through the above accompanying drawings, definite embodiments of the present invention have been shown, and more detailed descriptions will be provided in the following. These accompanying drawings and textual descriptions are not intended to limit the scope of the inventive concepts in any way, but rather to illustrate the concepts of the present invention for those skilled in the art by referring to particular embodiments.

### DESCRIPTION OF EMBODIMENTS

Exemplary embodiments will be described in detail herein, examples of which are represented in the accompanying drawings. When the following description relates to the accompanying drawings, unless otherwise indicated, the same numbers in different accompanying drawings indicate the same or similar elements. The implementations described in the following exemplary embodiments do not represent all implementations consistent with the present invention.

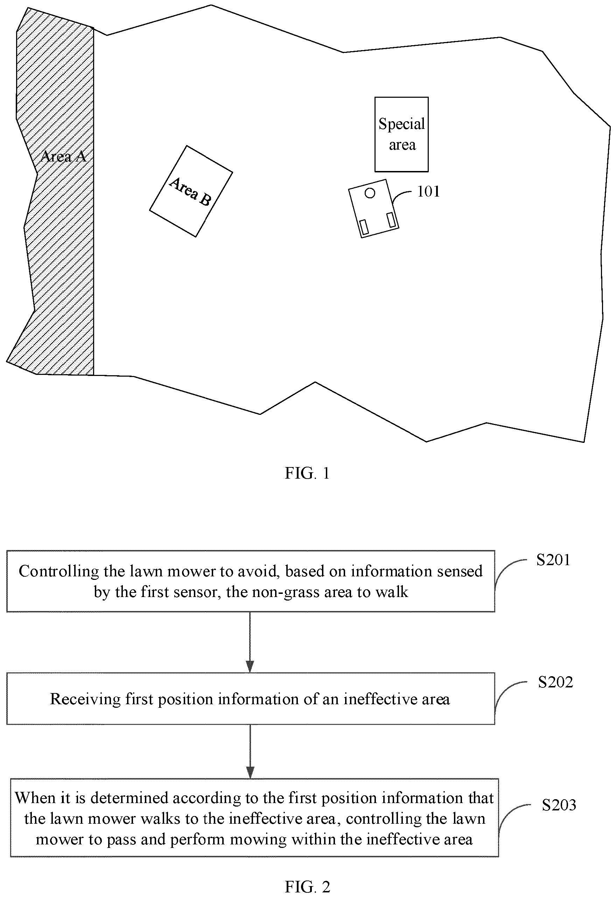

FIG. 1 is a diagram of an application scenario of a mowing control method provided by an embodiment of the present invention. A lawn mower is an intelligent lawn mower, and the intelligent lawn mower is provided with a first sensor, which can identify whether an area ahead is a grass area or a non-grass area. When it is a non-grass area, the intelligent lawn mower will avoid it; and when it is a grass area, the intelligent lawn mower will walk and perform mowing.

The inventors found that for some special areas, for example, an area in grassland such as a flagstone path, a boardwalk or a manhole cover combined with a lawn, the first sensor will determine that the area is a non-grass area and avoid it, resulting in the area not being mowed properly. As shown in FIG. 1, there are area A and area B in a map, where area A may be a mowed area, and area B is a restricted area where the lawn mower is strictly prohibited from walking. The lawn mower is 101 in the figure. When the lawn mower walks and comes to a special area, the first sensor may identify the special area as a non-grass area and control the mower to bypass it.

A cutter disk of the lawn mower is disposed at the bottom of the body (near the ground), and the cutter disk is disposed at a preset distance from the side of the body of the lawn mower, and is not close to the side of the body. When the lawn mower bypasses the non-grass area (special area), the body of the lawn mower is outside the non-grass area (within the grass area), and the cutter disk of the lawn mower is at least the preset distance away from the boundary of the non-grass area, so at least grass within the preset distance cannot be cut clean. In addition, the lawn mower will not be able to cut grass within the special area if there is the grass within the special area.

In addition, when the lawn mower bypasses the non-grass area, it is necessary to re-plan a path, which will increase the calculated amount, and lead to path increase or path complication. Therefore, the mowing efficiency of the lawn mower needs to be further improved.

The inventors found that even if the lawn mower passes the surfaces of these special areas, it will not cause damage to the lawn mower and the special areas, and the passing efficiency can be improved.

Based on the above problems, the present application can set up an ineffective area on a map for a special area, so that when walking to the ineffective area, the lawn mower can directly pass through it and perform mowing without having to avoid it based on the information of the non-grass area identified by the first sensor. When leaving the ineffective area, the lawn mower can continue mowing based on the first sensor, which can improve the mowing efficiency of the lawn mower.

FIG. 2 is a schematic flowchart of a mowing control method provided by an embodiment of the present invention. The method is applied to a lawn mower. Specifically, the method may be applied to a control component on the lawn mower. The lawn mower includes a first sensor, where the first sensor is a non-contact sensor, and the non-contact sensor is used to distinguish between a grass area and a non-grass area. The method includes the following steps.

S201, controlling the lawn mower to avoid, based on information sensed by the first sensor, the non-grass area to walk.

The first sensor is provided on the lawn mower. The first sensor is a non-contact sensor, and the type of the first sensor may be an ultrasonic apparatus, a visual apparatus or an infrared apparatus, etc. Exemplarily, it may be the visual apparatus, and the visual apparatus may be used to distinguish between the grass area and the non-grass area. When the first sensor identifies that it is a grass area within a first preset distance of the lawn mower, the lawn mower is controlled to work normally, i.e., to be able to pass and perform mowing. When the first sensor identifies that there is a non-grass area within the first preset distance of the lawn mower, the lawn mower is controlled to avoid the non-grass area to walk when it is at a second predetermined distance from the non-grass area. Exemplarily, the first preset distance may be from 0 to 2 meters; and the second preset distance may be from 30 centimeters to 60 centimeters.

By providing the first sensor, the non-grass area can be identified in advance and avoided without waiting for the lawn mower to collide with the obstacle and then bypassing it, which has higher efficiency compared with an ordinary lawn mower whether for mapping or for mowing.

S202, receiving first position information of an ineffective area; where the ineffective area is used to indicate that the lawn mower no longer avoids the non-grass area to walk based on the information sensed by the first sensor.

S203, when it is determined according to the first position information that the lawn mower walks to the ineffective area, controlling the lawn mower to pass and perform mowing within the ineffective area.

In a lawn, there are often areas such as flagstone paths, boardwalks or manhole covers combined with the lawn, and these areas are areas that also need to be mowed. However, for an intelligent lawn mower, the flagstone paths, the boardwalks or the manhole covers belong to non-grass areas. When these areas are detected, the intelligent lawn mower will avoid them, and the mowing efficiency for these special areas needs to be improved.

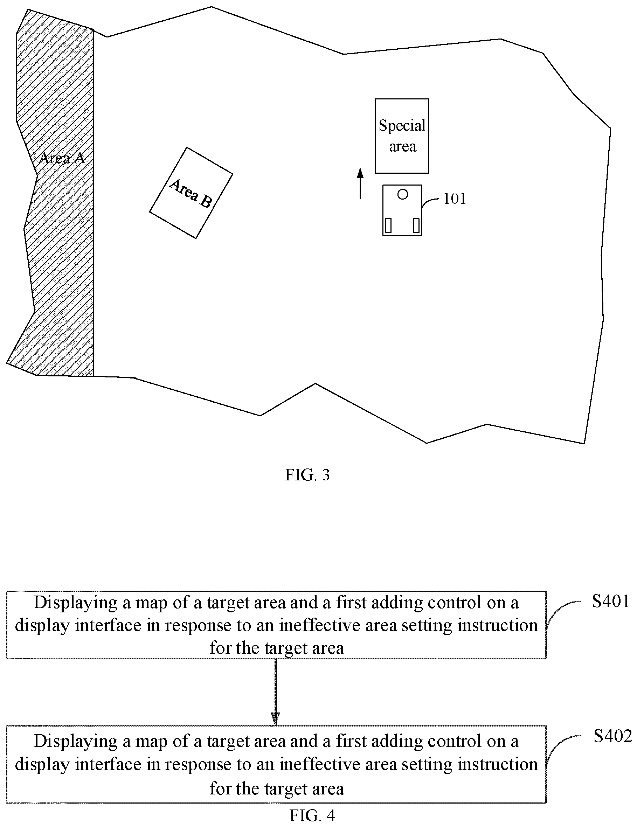

Based on this problem, the above special area may be set as an ineffective area, and the lawn mower may receive the first position information of one or more set ineffective areas. When it is determined based on the first position information that the lawn mower walks to the area, no avoidance is carried out, i.e., the lawn mower is controlled to pass and perform mowing in the ineffective area. FIG. 3 is a schematic diagram of walking of a lawn mower after an ineffective area is set up provided by an embodiment of the present invention. As shown in FIG. 3, when walking to the special area, the lawn mower 101 continues walking in the direction indicated by the arrow.

The ineffective area may be set up by a terminal device communicating with the lawn mower. Exemplarily, a map may be displayed on an application program of the terminal device, and the ineffective area may be set up on the map. After setting up is completed and saved, the lawn mower may obtain the map in which the ineffective area is set up and perform mowing according to the map.

When leaving the position of the ineffective area, the lawn mower may perform mowing based on the first sensor again.

The concept of the ineffective area as set up here is different from that of a restricted area. The restricted area refers to an area which the lawn mower determines by itself that it is able to pass through but the lawn mower is not allowed to pass through; and the ineffective area refers to an area which the lawn mower determines by itself that it is not able to pass through but the lawn mower is allowed to pass through.

After the ineffective area is set up for the special area, the mowing efficiency can be improved in two aspects. First, if the ineffective area is not set up, the lawn mower will not perform mowing when walking to the special area. On the one hand, the grass within the preset distance from the non-grass area cannot be cut cleanly; on the other hand, the grass in the flagstone path cannot be cut. Thus, it is required to manually control the lawn mower to mow this area or manually mow this area subsequently. Compared to this method, the method of the present application does not need to perform mowing manually, and saves labor. Second, if the ineffective area is not set up, the lawn mower will avoid the special area when walking to it. The lawn mower usually will back up, turn left and then go ahead again in the process of avoiding, and if a non-grass area is detected again, the lawn mower will, again, back up, turn left and then go ahead again. This process will take longer time, and the bypassing path is quite complex. Compared to this method, the method of the present application does not need to detour and does not need to spend long time to determine the bypassing path, which improves the efficiency. In addition, when bypassing the special area, the lawn in the area where the bypassing route is located will also be subject to crushing for a second time, which affects the mowing effect; while the method of the present application does not need crushing for a second time, improving the aesthetics and flatness of the lawn.

The present invention provides the mowing control method. The method is applied to the lawn mower, and the lawn mower includes the first sensor, where the first sensor is a non-contact sensor, and the non-contact sensor is used to distinguish between the grass area and the non-grass area. The method includes: controlling the lawn mower to avoid the non-grass area to walk; receiving the first position information of the ineffective area, where the ineffective area is used to indicate that the lawn mower no longer avoids obstacles based on the information sensed by the first sensor; when it is determined according to the first position information that the lawn mower walks to the ineffective area, controlling the lawn mower to pass and perform mowing within the ineffective area. Since there is no need to avoid the ineffective area, the walking path of the lawn mower is simpler, thereby improving the mowing efficiency of the lawn mower.

Optionally, the controlling the lawn mower to pass and perform mowing within the ineffective area includes:
determining a target path within the ineffective area, and controlling the lawn mower to pass along the target path and perform mowing.

When passing and performing mowing within the ineffective area, the target path within the ineffective area may be planned. Through planning the target path, the lawn mower can be controlled to pass along the target path and perform mowing. Determining the target path and passing and performing mowing based on the target path provide higher mowing efficiency compared to the lawn mower randomly walking within the ineffective area.

Optionally, the determining the target path within the ineffective area includes:
determining the target path according to at least one of a path that has been walked along, a walking direction of the lawn mower, a path that has not been walked along.

The target path may indicate a walking path and direction of the lawn mower. When determining the target path, it can be set based on information of the lawn mower outside the ineffective area to improve the rationality of the set target path.

Exemplarily, the target path may be determined according to the path that has been walked along and/or the path that has not been walked along. The start point and end point of the target path may be close to the path that has not been walked along and far away from the path that has been walked along, so as to avoid secondary crushing on the path that has been walked along.

**In** addition, the target path may also be determined according to the current walking direction of the lawn mower, thereby minimizing operations such as turning the lawn mower around as much as possible.

By determining the target path based on the path that has been walked along, the walking direction of the lawn mower, the path that has not been walked along, the rationality of the determined target path can be improved, which further improves the mowing efficiency of the lawn mower.

Optionally, the lawn mower is further configured to record a mowing path while performing mowing; the target path is parallel to a mowing path at a peripheral position of the ineffective area.

Specifically, when the lawn mower is mowing outside the ineffective area, the mowing path may be recorded, such as mowing from south to north. When planning the target path within the ineffective area, a mowing path at the peripheral position adjacent to the ineffective area may be determined, and the target path is parallel to the mowing path at the peripheral position. Exemplarily, when the mowing path at the peripheral position is from south to north, the mowing path within the ineffective area is from north to south, or from south to north.

When performing mowing within the ineffective area, if the target path is parallel to the mowing path at the peripheral position of the ineffective area, the mowing effect can be improved, making the lawn more beautiful and reducing the probability of missing mowing.

Optionally, the lawn mower includes a second sensor, and the second sensor is a contact sensor. The controlling the lawn mower to pass and perform mowing within the ineffective area includes:
when it is identified based on the second sensor that an obstacle that the lawn mower is not capable of passing through exists in the ineffective area, controlling the lawn mower to bypass the obstacle.

Exemplarily, when it is identified based on the second sensor that an obstacle that the lawn mower cannot pass through exists on the ground of the ineffective area, or exemplarily, an obstacle that the lawn mower cannot pass through exists on the ground of the target path in the ineffective area, then the lawn mower is controlled to bypass the obstacle in order to complete mowing of the ineffective area.

By providing the second sensor, the lawn mower can be protected from forcibly hitting the obstacle multiple times, resulting in damage to the lawn mower; and the lawn mower can also be prevented from staying in place and not being able to complete remaining mowing tasks.

After the ineffective area is set up, when passing within the ineffective area, the obstacle avoidance is no longer performed based on the information sensed by the first sensor. Accordingly, the second sensor may be provided on the lawn mower. The second sensor may be a contact sensor, and optionally, the second sensor may be a collision sensor or a wading sensor or a drop sensor. Exemplarily, when it is a collision sensor, the collided object may be identified as an obstacle. The obstacle here refers to an obstacle with a raised surface over which the lawn mower cannot pass directly, e.g., a pool, a fence, etc. When the obstacle is detected, the lawn mower may be controlled to bypass the obstacle, which can enable the lawn mower to pass and perform mowing smoothly within the ineffective area.

By providing the second sensor, the problem of not being able to identify obstacles when no longer avoiding the obstacles based on information sensed by the first sensor can be solved, which can increase the probability of the lawn mower passing smoothly within the ineffective area.

In an embodiment, the method further includes:
when a number of times that obstacle avoidance is performed within the ineffective area based on information of the second sensor exceeds a preset value, cancelling the ineffective area that has been set up.

When the number of times that obstacle avoidance is performed based on the information of the second sensor exceeds a preset value, it is indicated that the terrain in the ineffective area is complex, and a large amount of time will be wasted if continuing walking according to the target path within the ineffective area, which reduces the work efficiency. At this point, the ineffective area that has been set up can be cancelled.

After canceling the setting of the ineffective area, the lawn mower can restore the control logic of performing obstacle avoidance based on the information of the first sensor and the second sensor, so as to ensure that the lawn mower completes the mowing task according to the originally planned path.

In an embodiment, the method further includes:
when the number of times that obstacle avoidance is performed within the ineffective area based on the information of the second sensor exceeds the preset value, controlling the lawn mower to walk towards a preset boundary, and cancelling the ineffective area that has been set up; where the preset boundary is a boundary of the ineffective area that is the closest to the lawn mower among boundaries of the ineffective area.

In an embodiment, the method further includes:
when the number of times that obstacle avoidance is performed within the ineffective area based on the information of the second sensor exceeds the preset value, controlling the lawn mower to return to an initial obstacle avoidance start point along a path that has been walked along, and cancelling the ineffective area that has been set up.

When the number of times that obstacle avoidance is performed based on the information of the second sensor exceeds a preset value, it is indicated that the terrain in the ineffective area is complex, and a large amount of time will be wasted if continuing walking according to the target path, which reduces the work efficiency. At this point, the ineffective area that has been set up can be cancelled.

On the basis of canceling the ineffective area that has been set, the lawn mower may be controlled to leave the ineffective area. At this point, two methods can be used. Firstly, the lawn mower is controlled to move towards the nearest boundary of the ineffective area, which can allow the lawn mower to leave the ineffective area as quickly as possible and restore the working efficiency of the lawn mower. Second, the lawn mower is controlled to return to the initial obstacle avoidance start point along the path that has been walked along. The path that has been walked along is a passable path. The lawn mower returns along the target path that has been walked along, so there is a high probability that it will not collide with obstacles, and the lawn mower is able to return to the initial obstacle avoidance start point quickly. Exemplarily, the path that has been walked along may be the target path that has been walked along.

After canceling the setting of the ineffective area, the lawn mower can restore the control logic of performing obstacle avoidance based on the information of the first sensor and the second sensor, so as ensure that the lawn mower completes the mowing task according to the originally planned path.

Optionally, the method further includes:
displaying a mowed area and a path blank area on a terminal device for selection by an operator during a mowing process; where the path blank area indicates an area not passed by the lawn mower.

The timing of setting up the ineffective area may be setting up before mowing, or setting up when the presence of a special area is discovered after mowing, and then performing mowing again. In order to facilitate a user to subsequently set up an ineffective area or a restricted area on the map via the application program of the terminal device, the mowed area and the path blank area may be displayed on the terminal device when the lawn mower is performing mowing. The mowed area represents an area that the lawn mower has already mowed, and the path blank area represents an area that the lawn mower has not passed through. By setting up the path blank area, the user can quickly determine the position of the ineffective area on the map.

By displaying the path blank area and the mowed area mentioned above, it is beneficial for the user to quickly determine the position of the ineffective area to be set up. It is avoided that the user determines the position of the ineffective area on the entire map of the lawn, and the efficiency and accuracy for setting up the ineffective area by the user can be improved.

Optionally, the method further includes:
determining a boundary of the path blank area, and displaying the boundary of the path blank area on the terminal device for selection by the operator.

When displaying the path blank area, the boundary of the path blank area may also be displayed. By displaying the boundary, it is convenient for the user to adjust the size of the ineffective area based on the boundary when setting up the ineffective area or the restricted area, which is convenient for the operation of the user.

Optionally, the method further includes:
when it is determined according to the first position information that the ineffective area is located in the mowed area, controlling the lawn mower to walk to the ineffective area again and perform supplemental mowing.

When setting up the ineffective area, the setting up may be performed by the lawn mower before mowing. During working, the lawn mower may plan a path and perform mowing based on the ineffective area set up on the map, so that when walking to the ineffective area, it may pass directly through the ineffective area and perform mowing.

Of course, it is also possible to set up the ineffective area on the way of mowing or after mowing. When the ineffective area is set up after mowing, the ineffective area may be located in the mowed area, and then it is necessary to control the lawn mower to walk to the ineffective area again to perform supplemental mowing.

Optionally, the method further includes:
when it is determined according to the first position information that the lawn mower is located in a current avoidance area, controlling the lawn mower to walk to an initial obstacle avoidance position of the ineffective area again and perform supplemental mowing.

When the lawn mower starts to avoid the current area on the way of mowing, if the user determines that the avoidance area is a special area, the lawn mower may be controlled to pause working and an ineffective area is set up on the terminal device. The ineffective area set up at this point is located in the current avoidance area. Then, when restarting to work, the lawn mower may once again walk to the initial obstacle avoidance position of the ineffective area, pass and perform mowing.

The lawn mower may receive the ineffective area set up by the terminal device in a standby state. For example, when the lawn mower is charging at a charging pile, or, when the lawn mower pauses working, the lawn mower may receive the first position information of the ineffective area.

In view of the problem that the intelligent lawn mower is unable to properly mow the special area, the present application creatively sets up the ineffective area, to enable the lawn mower to pass and perform mowing smoothly in the special area, and to continue to perform mowing based on the first sensor after leaving the special area, which can improve the mowing efficiency.

FIG. 4 is a schematic flowchart of a setting method provided by an embodiment of the present invention. The method is applied to a terminal device, and the method includes the following steps.

S401, displaying a map of a target area and a first adding control on a display interface in response to an ineffective area setting instruction for the target area; where the first adding control is used to add an ineffective area to the map of the target area.

When setting up the ineffective area, the setting up may be performed through an application program of the terminal device. Specifically, a user may trigger the ineffective area setting instruction for the target area, and the terminal device may display the map of the target area and the first adding control on the display interface, so that the ineffective area may be added to the displayed map by triggering the first adding control

Exemplarily, a control of "Set up an ineffective area" may be displayed on a preset page of the application program, and when the user triggers the control, all relevant lawn areas may be displayed. The target area may be selected according to an actual need, which indicates that the ineffective area setting instruction for the target area has been triggered.

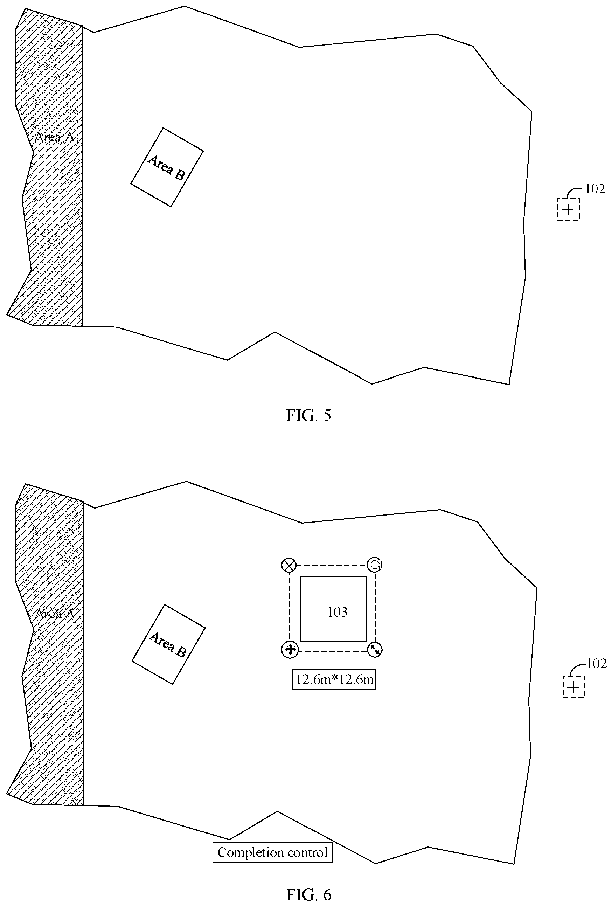

As shown in FIG. 5, area A is an area which the lawn mower has mowed, area B is a restricted area that is set up, and 102 represents the first adding control. When setting up the ineffective area, the first adding control may be displayed on the map.

S402, displaying at least one added ineffective area on the map of the target area in response to a trigger event for the first adding control, to enable a lawn mower to, when walking to any ineffective area, pass and perform mowing within the ineffective area.

When the first adding control is triggered, an ineffective area may be added to the map, and the added ineffective area may be one or more. After the setting up of the ineffective area is completed, when performing mowing in the target area corresponding to the map, the lawn mower may pass and perform mowing in the ineffective area if walking to the ineffective area.

As shown in FIG. 6, after triggering the first adding control, the ineffective area may be added to the map.

The present invention provides the setting method, and the method is applied to the terminal device. The map of the target area and the first adding control are displayed on the display interface in response to the ineffective area setting instruction for the target area, and at least one added ineffective area is displayed on the map of the target area in response to the trigger event for the first adding control, to enable the lawn mower to pass and perform mowing within any ineffective area when walking to the ineffective area. By setting the first adding control, it is possible to set up the ineffective area on the map, which improves the setting efficiency of the ineffective area.

Optionally, the displaying at least one added ineffective area on the map of the target area in response to the trigger event for the first adding control includes:
displaying a selection box and a completion control on the map of the target area in response to the trigger event for the first adding control; where an operation control is displayed in periphery of the selection box; adjusting the selection box and displaying the adjusted selection box in response to a preset trigger event for the operation control; determining an area corresponding to the adjusted selection box to be the ineffective area in response to a trigger event for the completion control.

A detailed process of setting up the ineffective area is as follows: after triggering the first adding control, the selection box and the completion control may be displayed on the map, and the operation control may be set in periphery of the selection box, so that the size or the position of the selection box can be adjusted and displayed through preset triggering for the operation control, so as to set up the ineffective area accurately.

As shown in FIG. 6, 103 represents a selection box. The selection box and the completion control may be displayed in the manner shown in the figure, where the operation control refers to a control around the selection box. There is no limitation as to the setting position of the operation control.

The ineffective area may be implemented by setting the selection box once or multiple times. The first adding control may be triggered multiple times when the selection box needs to be added multiple times. When there are multiple selection boxes, the operation control may be displayed only on the last added selection box, while the operation control is not displayed for other selection boxes. When there is a need to adjust another selection box, that selection box may be clicked, so as to display the operation control corresponding to that selection box. Or, the operation control may be displayed on all selection boxes.

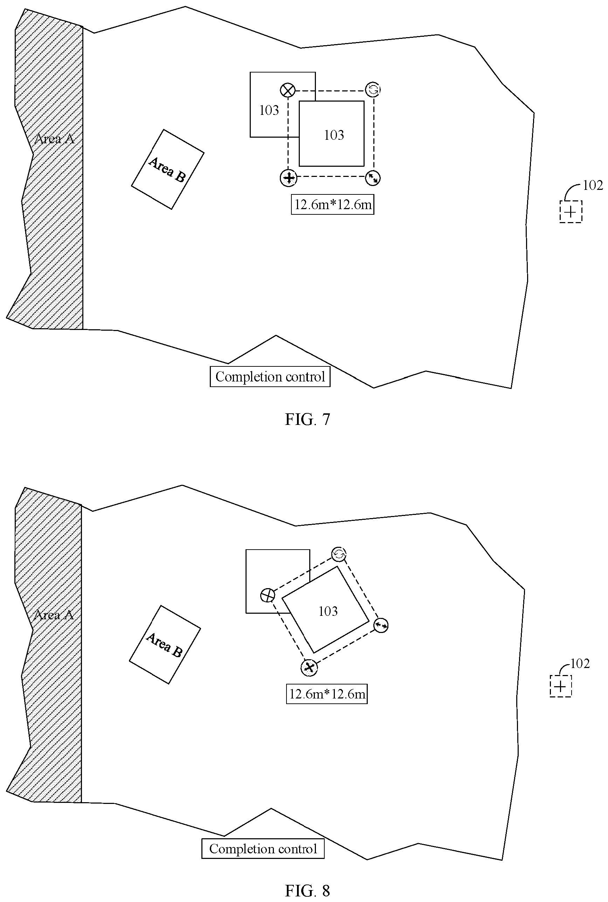

After the first adding control is triggered once or multiple times, and the selection box is adjusted, the completion control may be clicked to complete the setting up of the ineffective area. When there is one selection box 103 in the map as shown in FIG. 6, if the first adding control 102 is triggered again, the second selection box 103 (a selection box with an operation control being displayed) and the corresponding operation control will be displayed as shown in FIG. 7. The selection box 103 of FIG. 6 corresponds to the selection box without an operation control being displayed in FIG. 7.

By setting the completion control, the selection box and the operation control, it is convenient to show the user the position of the ineffective area, and convenient to adjust the ineffective area. In addition, it is convenient to save the set ineffective area on the map when the setting up is completed.

Optionally, the method further includes:
displaying area of the selection box on the map of the target area in response to the trigger event for the first adding control.

In order to facilitate the user to perceive the size of the set ineffective area, it is also possible to display the area of the selection box at the same time when the first adding control is triggered to display the selection box. Exemplarily, the area of the selection box added in FIG. 6 is 12.6m*12.6m.

By displaying the area of the selection box on the display interface, the accuracy for setting up the ineffective area by the user can be improved, thereby improving the mowing effect of the lawn mower.

Optionally, the operation control includes a deletion control; and the adjusting the selection box in response to the preset trigger event for the operation control includes:
deleting the selection box in response to a click event for the deletion control;
and/or, the operation control further includes a rotation control; and the adjusting the selection box in response to the preset trigger event for the operation control further includes:
   rotating the selection box according to a preset direction and angle in response to a click event for the rotation control;
   and/or, the operation control further includes a movement control; and the adjusting the selection box in response to the preset trigger event for the operation control further includes:
      moving the selection box in response to a drag event for the movement control;
      and/or, the operation control further includes a size adjustment control; and the adjusting the selection box in response to the preset trigger event for the operation control further includes:
         enlarging the selection box in response to an enlargement event for the size adjustment control; reducing the selection box in response to a reduction event for the size adjustment control.

In order to make an adjustment to the size and position of the selection box, the operation control may include the deletion control, the rotation control, the movement control and the size adjustment control

When the deletion control is triggered, the corresponding selection box may be deleted. When the deletion control in FIG. 7 is clicked, the selection box may be deleted, presenting the interface shown in FIG. 6.

When the rotation control is triggered, the corresponding selection box may be rotated. When the rotation control in FIG. 7 is clicked, the selection box may be rotated, exemplarily, around the center of the selection box, presenting the interface shown in FIG. 8.

When the movement control is triggered, the selection box may be moved, and a target position of the movement may be a position where the user stops triggering the movement control

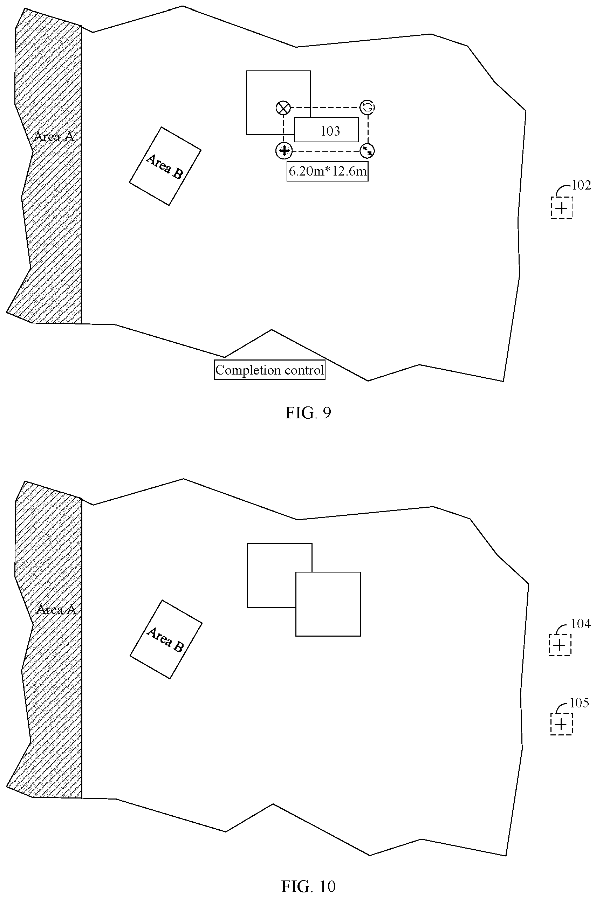

When the size adjustment control is triggered, such as stretching towards the lower right corner, the selection box may be enlarged as a whole; when dragging towards the upper left corner, the selection box may be reduced as a whole. In addition, only the length or width may be adjusted. The degree of enlarging or reducing is related to the timing when the user stops triggering the control. When the operation of reducing the width of the selection box in FIG. 7 is performed, the interface shown in FIG. 9 may be presented.

When adjusting the size of the selection box, the area under the selection box is adjusted correspondingly to show the user the area of the current selection box.

By setting multiple types of operation controls, it is convenient for the user to adjust the size, position or direction of the selection box.

Optionally, the method further includes:
displaying a map saving control on the display interface in response to saving the ineffective area; synchronizing a map in which the ineffective area is set up to the lawn mower in response to a trigger event for the map saving control

After saving the set ineffective area, the ineffective area is saved only on the map. In order to synchronize the map on the terminal device to the lawn mower, the map saving control may also be displayed on the display interface. When the map saving control is triggered, the map in which the ineffective area is set up may be synchronized to the lawn mower, so that the lawn mower can perform mowing based on the updated map.

As shown in FIG. 10, a map saving control 104 may be displayed when the setting up of the ineffective area is completed.

By displaying the map saving control on the display interface, it is possible to synchronize the set map to the lawn mower, avoiding the lawn mower from performing mowing based on an unsynchronized map, and improving the accuracy of mowing.

Optionally, the method further includes:
displaying a second adding control on the display interface in response to determining the area corresponding to the adjusted selection box to be the ineffective area; where the second adding control is used for user selection of an adding type; the adding type includes at least one of an ineffective area, a restricted area, a channel, a map; displaying the adding type for user selection on the display interface in response to a trigger event for the second adding control

When setting up the ineffective area, it is possible that not all the ineffective areas have been set up at once. When one or more ineffective areas have been set up by the completion control, the first adding control and the completion control will not be displayed on the interface, and it is not possible to continue to set up ineffective areas.

After one or more ineffective areas are set up, the second adding control may be displayed on the display interface, and it is possible to continue to set multiple types such as ineffective areas, restricted areas or channels in the map based on the second adding control. As shown in FIG. 10, a second adding control 105 may be displayed when one or more the ineffective areas have been set up.

By setting the second adding control, it is possible to continue to set up the ineffective areas, the restricted areas or the channels after setting up some ineffective areas, so as to meet different setting needs of users.

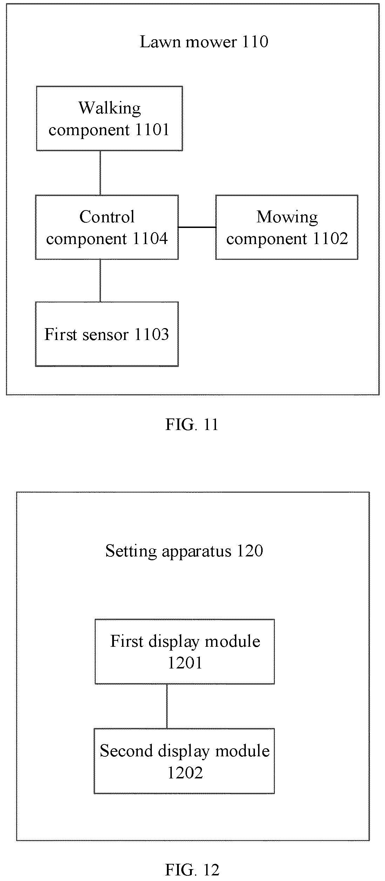

FIG. 11 is a schematic structural diagram of a lawn mower provided by an embodiment of the present invention. The lawn mower includes:
a walking component 1101; a mowing component 1102; a first sensor 1103, where the first sensor 1103 is a non-contact sensor, and the non-contact sensor is used to distinguish between a grass area and a non-grass area; a control component 1104, where the control component 1104 is connected to the walking component 1101, the mowing component 1102 and the first sensor 1103, respectively, and the control component 1104 is configured to execute the method in the above method embodiments.

The lawn mower provided by the embodiments of the present invention can implement the above mowing control method of the embodiments as shown in FIG. 2. Implementation principles and technical effects thereof are similar, and will not be repeated here.

FIG. 12 is a schematic structural diagram of a setting apparatus provided by an embodiment of the present invention. The apparatus is applied to a terminal device, and the apparatus 120 includes:
a first display module 1201, configured to display a map of a target area and a first adding control on a display interface in response to an ineffective area setting instruction for the target area; where the first adding control is used to add an ineffective area to the map of the target area;
a second display module 1202, configured to display at least one added ineffective area on the map of the target area in response to a trigger event for the first adding control, to enable a lawn mower to, when walking to any ineffective area, pass and perform mowing within the ineffective area.

In an embodiment, the first display module 1201 is specifically configured to:
display a selection box and a completion control on the map of the target area in response to the trigger event for the first adding control; where an operation control is displayed in periphery of the selection box;
adjust the selection box and display the adjusted selection box in response to a preset trigger event for the operation control;
determine an area corresponding to the adjusted selection box to be the ineffective area in response to a trigger event for the completion control

In an embodiment, the apparatus further includes: a third display module, configured to:
display area of the selection box on the map of the target area in response to the trigger event for the first adding control.

In an embodiment, where the operation control includes a deletion control; and when adjusting the selection box in response to the preset trigger event for the operation control, the first display module 1201 is specifically configured to:
delete the selection box in response to a click event for the deletion control;
and/or, the operation control further includes a rotation control; and when adjusting the selection box in response to the preset trigger event for the operation control, the first display module 1201 is further configured to:
   rotate the selection box according to a preset direction and angle in response to a click event for the rotation control;
   and/or, the operation control further includes a movement control; and when adjusting the selection box in response to the preset trigger event for the operation control, the first display module 1201 is further configured to:
      move the selection box in response to a drag event for the movement control;
      and/or, the operation control further includes a size adjustment control; and when adjusting the selection box in response to the preset trigger event for the operation control, the first display module 1201 is further configured to:
         enlarge the selection box in response to an enlargement event for the size adjustment control; reduce the selection box in response to a reduction event for the size adjustment control.

In an embodiment, the apparatus further includes: a fourth display module, configured to:
display a map saving control on the display interface in response to saving the ineffective area;
synchronize a map in which the ineffective area is set up to the lawn mower in response to a trigger event for the map saving control.

In an embodiment, the apparatus further includes: a fifth display module, configured to:
display a second adding control on the display interface in response to determining the area corresponding to the adjusted selection box to be the ineffective area; where the second adding control is used for user selection of an adding type; the adding type includes at least one of an ineffective area, a restricted area, a channel, a map;
display the adding type for user selection on the display interface in response to a trigger event for the second adding control.

The setting apparatus provided by the embodiments of the present invention can implement the above setting method of the embodiments as shown in FIG. 4. Implementation principles and technical effects thereof are similar, and will not be repeated here.

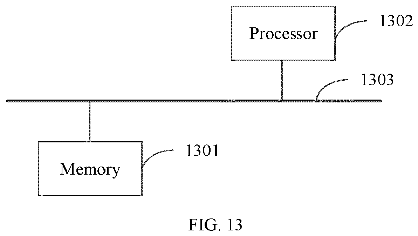

FIG. 13 is a schematic diagram of a hardware structure of an electronic device provided by an embodiment of the present invention. As shown in FIG. 13, the electronic device provided by this embodiment includes at least one processor 1301 and a memory 1302. The processor 1301 and the memory 1302 are connected through a bus 1303.

In a specific implementation process, the at least one processor 1301 executes computer execution instructions stored in the memory 1302, to enable the at least one processor 1301 to execute the method in the above method embodiments.

The specific implementation process of the processor 1301 can be found in the above method embodiments, and implementation principles and technical effects thereof are similar, and will not be repeated here in this embodiment.

In the above embodiment shown in FIG. 13, it should be understood that the processor may be a central processing unit (CPU), and may also be other general-purpose processors, a digital signal processor (DSP), an application specific integrated circuit (ASIC), etc. The general-purpose processor may be a microprocessor or the processor may also be any conventional processor, etc. The steps of the method disclosed in conjunction with the invention may be embodied directly as being executed and completed by a hardware processor, or by a combination of hardware and software modules in the processor.

The memory may include a high-speed random access memory (RAM), and may also include a non-volatile memory (NVM), such as at least one disk memory.

The bus may be an industry standard architecture (ISA) bus, a peripheral component interconnect (PCI) bus or an extended industry standard architecture (EISA) bus, etc. The bus may be classified as an address bus, a data bus, a control bus, etc. For ease of representation, the bus in the accompanying drawings of the present application is not limited to only one bus or one type of buses.

An embodiment of the present invention also provides a computer-readable storage medium. The computer-readable storage medium has computer execution instructions stored therein, and when the computer execution instructions are executed by a processor, the method of the above method embodiments is implemented.

For the computer-readable storage medium described above, the readable storage medium may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk. The readable storage medium may be any available medium that can be accessed by a general-purpose or special-purpose computer.

An exemplary readable storage medium is coupled to a processor, so that the processor is able to read information from the readable storage medium and can write information to the readable storage medium. Certainly, the readable storage medium may also be a component of the processor. The processor and the readable storage medium may be located in an application specific integrated circuit (ASIC). Certainly, the processor and the readable storage media may also exist as discrete components in a device.

An embodiment of the present invention also provides a computer program product including a computer program, and when the computer program is executed by a processor, the method of the above method embodiments is implemented.

Those of ordinary skills in the art may understand that all or part of the steps to realize the above method embodiments may be completed through hardware related to program instructions. The foregoing program may be stored in a computer-readable storage medium. When the program is executed, the steps including the aforementioned method embodiments are executed. The foregoing storage medium includes: a ROM, a RAM, a diskette, an optical disk, or other kinds of mediums that can store program code.

Finally, it should be noted that the above embodiments are only used to illustrate the technical solutions of the present application, not to limit them. Although the present application has been described in detail with reference to the foregoing embodiments, those of ordinary skills in the art should understand that it is still possible to make modifications to the technical solutions as recorded in the foregoing embodiments, or make equivalent replacements of some or all of the technical features therein; and such modifications or replacements do not make the essence of the corresponding technical solutions depart from the scope of the technical solutions of the embodiments of the present application.

In an embodiment, the apparatus further includes: a fifth display module, configured to:
display a second adding control on the display interface in response to determining the area corresponding to the adjusted selection box to be the ineffective area; where the second adding control is used for user selection of an adding type; the adding type includes at least one of an ineffective area, a restricted area, a channel, a map;
display the adding type for user selection on the display interface in response to a trigger event for the second adding control.

The setting apparatus provided by the embodiments of the present invention can implement the above setting method of the embodiments as shown in FIG. 4. Implementation principles and technical effects thereof are similar, and will not be repeated here.

FIG. 13 is a schematic diagram of a hardware structure of an electronic device provided by an embodiment of the present invention. As shown in FIG. 13, the electronic device provided by this embodiment includes at least one processor 1301 and a memory 1302. The processor 1301 and the memory 1302 are connected through a bus 1303.

In a specific implementation process, the at least one processor 1301 executes computer execution instructions stored in the memory 1302, to enable the at least one processor 1301 to execute the method in the above method embodiments.

The specific implementation process of the processor 1301 can be found in the above method embodiments, and implementation principles and technical effects thereof are similar, and will not be repeated here in this embodiment.

In the above embodiment shown in FIG. 13, it should be understood that the processor may be a central processing unit (CPU), and may also be other general-purpose processors, a digital signal processor (DSP), an application specific integrated circuit (ASIC), etc. The general-purpose processor may be a microprocessor or the processor may also be any conventional processor, etc. The steps of the method disclosed in conjunction with the invention may be embodied directly as being executed and completed by a hardware processor, or by a combination of hardware and software modules in the processor.

The memory may include a high-speed random access memory (RAM), and may also include a non-volatile memory (NVM), such as at least one disk memory.

The bus may be an industry standard architecture (ISA) bus, a peripheral component interconnect (PCI) bus or an extended industry standard architecture (EISA) bus, etc. The bus may be classified as an address bus, a data bus, a control bus, etc. For ease of representation, the bus in the accompanying drawings of the present application is not limited to only one bus or one type of buses.

An embodiment of the present invention also provides a computer-readable storage medium. The computer-readable storage medium has computer execution instructions stored therein, and when the computer execution instructions are executed by a processor, the method of the above method embodiments is implemented.

For the computer-readable storage medium described above, the readable storage medium may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk. The readable storage medium may be any available medium that can be accessed by a general-purpose or special-purpose computer.

An exemplary readable storage medium is coupled to a processor, so that the processor is able to read information from the readable storage medium and can write information to the readable storage medium. Certainly, the readable storage medium may also be a component of the processor. The processor and the readable storage medium may be located in an application specific integrated circuit (ASIC). Certainly, the processor and the readable storage media may also exist as discrete components in a device.

An embodiment of the present invention also provides a computer program product including a computer program, and when the computer program is executed by a processor, the method of the above method embodiments is implemented.

Those of ordinary skills in the art may understand that all or part of the steps to realize the above method embodiments may be completed through hardware related to program instructions. The foregoing program may be stored in a computer-readable storage medium. When the program is executed, the steps including the aforementioned method embodiments are executed. The foregoing storage medium includes: a ROM, a RAM, a diskette, an optical disk, or other kinds of mediums that can store program code.

Finally, it should be noted that the above embodiments are only used to illustrate the technical solutions of the present application, not to limit them. The scope of the claims is defined by the appended claims.

## Claims

1. A computer implemented mowing control method, wherein the method is applied to a lawn mower, and the lawn mower comprises a first sensor, where the first sensor is a non-contact sensor, and the non-contact sensor is used to distinguish between a grass area and a non-grass area; and the method comprises:
controlling (S201) the lawn mower to avoid, based on information sensed by the first sensor, the non-grass area to walk;
the method is **characterized by** further comprising:
receiving (S202) first position information of an ineffective area; wherein the ineffective area is used to indicate that the lawn mower no longer avoids the non-grass area to walk based on the information sensed by the first sensor, wherein the ineffective area is an area identified as the non-grass area by the first sensor of the lawn mower;
when it is determined according to the first position information that the lawn mower walks to the ineffective area, controlling (S203) the lawn mower to pass within the ineffective area;
when it is determined that the lawn mower has left the ineffective area, controlling the lawn mower to avoid, based on the information sensed by the first sensor, the non-grass area to walk.

2. The method according to claim 1, wherein the controlling (S201) the lawn mower to pass within the ineffective area comprises:
determining a target path within the ineffective area, and controlling the lawn mower to pass along the target path and perform mowing.

3. The method according to claim 2, wherein the determining the target path within the ineffective area comprises:
determining the target path according to at least one of a path that has been walked along, a walking direction of the lawn mower, a path that has not been walked along.

4. The method according to claim 1, wherein the lawn mower comprises a second sensor, and the second sensor is a contact sensor; the controlling (S201) the lawn mower to pass within the ineffective area comprises:
when it is identified based on the second sensor that an obstacle that the lawn mower is not capable of passing through exists in the ineffective area, controlling the lawn mower to bypass the obstacle.

5. The method according to claim 2, wherein the lawn mower is further configured to record a mowing path while performing mowing; the target path is parallel to a mowing path at a peripheral position of the ineffective area.

6. The method according to claim 4, wherein the method further comprises:
when a number of times that obstacle avoidance is performed within the ineffective area based on information of the second sensor exceeds a preset value, cancelling the ineffective area that has been set up.

7. The method according to claim 6, wherein the method further comprises:
when the number of times that obstacle avoidance is performed within the ineffective area based on the information of the second sensor exceeds the preset value, controlling the lawn mower to walk towards a preset boundary, and cancelling the ineffective area that has been set up; wherein the preset boundary is a boundary of the ineffective area that is the closest to the lawn mower among boundaries of the ineffective area; or,
when the number of times that obstacle avoidance is performed within the ineffective area based on the information of the second sensor exceeds the preset value, controlling the lawn mower to return to an initial obstacle avoidance start point along a path that has been walked along, and cancelling the ineffective area that has been set up.

8. The method according to claim 1, wherein the method further comprises:
displaying a mowed area and a path blank area on a terminal device for selection by an operator during a mowing process; wherein the path blank area indicates an area not passed by the lawn mower.

9. The method according to claim 8, wherein the method further comprises:
determining a boundary of the path blank area, and displaying the boundary of the path blank area on the terminal device for selection by the operator.

10. The method according to any one of claims 1-9, wherein the method further comprises:
when it is determined according to the first position information that the ineffective area is located in a mowed area, controlling the lawn mower to walk to the ineffective area again and perform supplemental mowing.

11. The method according to any one of claims 1-9, wherein the method further comprises:
when it is determined according to the first position information that the ineffective area is located in a current avoidance area, controlling the lawn mower to walk to an initial obstacle avoidance position of the ineffective area again and perform supplemental mowing.

12. The method according to any one of claims 1-11, wherein the ineffective area is set up by a terminal device communicating with the lawn mower on a map of a target area.

13. The method according to any one of claims 1-12, wherein the ineffective area is added to the map of the target area though a first adding control on a display interface of the terminal device.

14. An electronic device, **characterized by** comprising: at least one processor (1301) and a memory (1302);
wherein the memory (1302) has computer execution instructions stored therein;
the at least one processor (1301) executes the computer execution instructions stored in the memory (1302) to enable the at least one processor (1301) to perform the method according to any one of claims 1-13.

15. A computer-readable storage medium, **characterized by** comprising the computer-readable storage medium has computer execution instructions stored therein, and when the computer execution instructions are executed by a processor, the method according to any one of claims 1-13 is implemented.

## Patentansprüche

1. Computerimplementiertes Verfahren zur Mähsteuerung, wobei das Verfahren auf einen Rasenmäher angewendet wird und der Rasenmäher einen ersten Sensor umfasst, wobei der erste Sensor ein berührungsloser Sensor ist und der berührungslose Sensor dazu dient, zwischen einer Grasfläche und einer Nicht-Grasfläche zu unterscheiden; und wobei das Verfahren Folgendes umfasst:
Steuern (S201) des Rasenmähers, um auf der Grundlage der vom ersten Sensor erfassten Informationen die Nicht-Grasfläche beim Fahren zu meiden;
wobei das Verfahren **dadurch gekennzeichnet ist, dass** es ferner Folgendes umfasst:
Empfangen (S202) erster Positionsinformationen eines unwirksamen Bereichs; wobei der unwirksame Bereich dazu dient, anzuzeigen, dass es der Rasenmäher nicht mehr vermeidet, die Nicht-Grasfläche zu befahren, und zwar auf der Grundlage der vom ersten Sensor erfassten Informationen, wobei der unwirksame Bereich ein Bereich ist, der vom ersten Sensor des Rasenmähers als Nicht-Grasfläche identifiziert wird;
wenn anhand der ersten Positionsinformationen bestimmt wird, dass der Rasenmäher auf den unwirksamen Bereich zufährt, Steuern (S203) des Rasenmähers, um den unwirksamen Bereich zu durchfahren;
wenn bestimmt wird, dass der Rasenmäher den unwirksamen Bereich verlassen hat, Steuern des Rasenmähers, um es auf der Grundlage der vom ersten Sensor erfassten Informationen zu vermeiden, auf der Nicht-Grasfläche zu fahren.

2. Verfahren nach Anspruch 1, wobei das Steuern (S201) des Rasenmähers, den unwirksamen Bereich zu durchfahren, Folgendes umfasst:
Bestimmen eines Zielpfads innerhalb des unwirksamen Bereichs und Steuern des Rasenmähers, damit dieser entlang des Zielpfads fährt und den Mähvorgang durchführt.

3. Verfahren nach Anspruch 2, wobei das Bestimmen des Zielpfads innerhalb des unwirksamen Bereichs Folgendes umfasst:
Bestimmen des Zielpfads entsprechend mindestens einem der folgenden Merkmale: einem bereits gefahrenen Pfad, einer Fahrtrichtung des Rasenmähers oder einem noch nicht gefahrenen Pfad.

4. Verfahren nach Anspruch 1, wobei der Rasenmäher einen zweiten Sensor umfasst und der zweite Sensor ein Kontaktsensor ist; wobei das Steuern (S201) des Rasenmähers so, dass er den unwirksamen Bereich durchfährt, Folgendes umfasst:
wenn auf der Grundlage des zweiten Sensors identifiziert wird, dass sich im unwirksamen Bereich ein Hindernis befindet, das der Rasenmäher nicht passieren kann, Steuern des Rasenmähers, um das Hindernis zu umfahren.

5. Verfahren nach Anspruch 2, wobei der Rasenmäher ferner so konfiguriert ist, dass er während des Mähvorgangs einen Mähpfad aufzeichnet; wobei der Zielpfad parallel zu einem Mähpfad an einer Randposition des unwirksamen Bereichs verläuft.

6. Verfahren nach Anspruch 4, wobei das Verfahren ferner Folgendes umfasst:
wenn die Anzahl der Fälle, in denen eine Hindernisumfahrung innerhalb des unwirksamen Bereichs auf der Grundlage von Informationen des zweiten Sensors durchgeführt wird, einen voreingestellten Wert überschreitet, Aufheben des eingerichteten unwirksamen Bereichs.

7. Verfahren nach Anspruch 6, wobei das Verfahren ferner Folgendes umfasst:
wenn die Anzahl der Fälle, in denen eine Hindernisumfahrung innerhalb des unwirksamen Bereichs auf der Grundlage der Informationen des zweiten Sensors durchgeführt wird, den voreingestellten Wert überschreitet, Steuern des Rasenmähers, um sich auf eine voreingestellte Grenze zuzubewegen, und Aufheben des eingerichteten unwirksamen Bereich; wobei die voreingestellte Grenze eine Grenze des unwirksamen Bereichs ist, die dem Rasenmäher unter den Grenzen des unwirksamen Bereichs am nächsten liegt; oder,
wenn die Anzahl der Fälle, in denen eine Hindernisumfahrung innerhalb des unwirksamen Bereichs auf der Grundlage der Informationen des zweiten Sensors durchgeführt wird, den voreingestellten Wert überschreitet, Steuern des Rasenmähers, um entlang eines bereits zurückgelegten Pfads zu einem anfänglichen Startpunkt der Hindernisumfahrung zurückzukehren, und Aufheben des eingerichteten unwirksamen Bereichs.

8. Verfahren nach Anspruch 1, wobei das Verfahren ferner Folgendes umfasst:
Anzeigen eines gemähten Bereichs und eines Pfad-Leerbereichs auf einem Endgerät zur Auswahl durch einen Bediener während eines Mähvorgangs; wobei der Pfad-Leerbereich einen Bereich anzeigt, der vom Rasenmäher nicht befahren wird.

9. Verfahren nach Anspruch 8, wobei das Verfahren ferner Folgendes umfasst:
Bestimmen einer Grenze des Pfad-Leerbereichs und Anzeigen der Grenze des Pfad-Leerbereichs auf dem Endgerät zur Auswahl durch den Bediener.

10. Verfahren nach einem der Ansprüche 1 bis 9, wobei das Verfahren ferner Folgendes umfasst:
wenn gemäß den ersten Positionsinformationen bestimmt wird, dass sich der unwirksame Bereich in einem gemähten Bereich befindet, Steuern des Rasenmähers, damit dieser erneut zu dem unwirksamen Bereich fährt und ein Nachmähen durchführt.

11. Verfahren nach einem der Ansprüche 1 bis 9, wobei das Verfahren ferner Folgendes umfasst:
wenn gemäß den ersten Positionsinformationen bestimmt wird, dass sich der unwirksame Bereich in einem aktuellen Umfahrungsbereich befindet, Steuern des Rasenmähers, so dass er erneut zu einer anfänglichen Hindernisumfahrungsposition des unwirksamen Bereichs fährt und ein Nachmähen durchführt.

12. Verfahren nach einem der Ansprüche 1 bis 11, wobei der unwirksame Bereich von einem mit dem Rasenmäher kommunizierenden Endgerät auf einer Karte eines Zielbereichs eingerichtet wird.

13. Verfahren nach einem der Ansprüche 1 bis 12, wobei der unwirksame Bereich über eine erste Hinzufügungssteuerung auf einer Anzeigenschnittstelle des Endgeräts zur Karte des Zielbereichs hinzugefügt wird.

14. Elektronische Vorrichtung, **dadurch gekennzeichnet, dass** sie Folgendes umfasst: mindestens einen Prozessor (1301) und einen Speicher (1302);
wobei in dem Speicher (1302) Computerausführungsbefehle gespeichert sind;
der mindestens eine Prozessor (1301) die im Speicher (1302) gespeicherten Computerausführungsbefehle ausführt, um es dem mindestens einen Prozessor (1301) zu ermöglichen, das Verfahren nach einem der Ansprüche 1 bis 13 auszuführen.

15. Computerlesbares Speichermedium, **dadurch gekennzeichnet, dass** es das computerlesbare Speichermedium umfasst, auf dem Computerausführungsbefehle gespeichert sind, und wenn die Computerausführungsbefehle von einem Prozessor ausgeführt werden, das Verfahren nach einem der Ansprüche 1 bis 13 implementiert wird.

## Revendications

1. Procédé de commande de tonte mis en œuvre par ordinateur, le procédé étant appliqué à une tondeuse à gazon, laquelle comprend un premier capteur, ce premier capteur étant un capteur sans contact, et le capteur sans contact permettant de distinguer une région gazonnée d'une région non gazonnée ; le procédé comprenant :
la commande (S201) de la tondeuse à gazon afin qu'elle évite, en fonction d'informations détectées par le premier capteur, de circuler dans la région non gazonnée ;
le procédé étant **caractérisé en ce qu'**il comprend en outre :
la réception (S202) de premières informations d'emplacement d'une région inefficace ; la région inefficace servant à indiquer que la tondeuse à gazon n'évite plus de circuler dans la région non gazonnée en fonction des informations détectées par le premier capteur, la région inefficace étant une région identifiée comme région non gazonnée par le premier capteur de la tondeuse à gazon,
lorsqu'il est déterminé selon les premières informations d'emplacement que la tondeuse à gazon se dirige vers la région inefficace, la commande (S203) de la tondeuse à gazon de façon qu'elle traverse la région inefficace,
lorsqu'il est déterminé que la tondeuse à gazon a quitté la région inefficace, la commande de la tondeuse à gazon de façon qu'elle évite, en fonction des informations détectées par le premier capteur, de circuler dans la région non gazonnée.

2. Procédé selon la revendication 1, dans lequel la commande (S201) de la tondeuse à gazon de façon qu'elle traverse la région inefficace comprend :
la détermination d'un trajet cible dans la région inefficace, et la commande de la tondeuse à gazon de façon qu'elle suive le trajet cible et réalise la tonte.

3. Procédé selon la revendication 2, dans lequel la détermination du trajet cible dans la région inefficace comprend :
la détermination du trajet cible selon un trajet déjà parcouru, la direction de déplacement de la tondeuse à gazon et/ou un trajet non encore parcouru.

4. Procédé selon la revendication 1, dans lequel la tondeuse à gazon comprend un deuxième capteur, et ce deuxième capteur est un capteur de contact ; la commande (S201) de la tondeuse à gazon de façon qu'elle traverse la région inefficace comprenant :
lorsqu'il est identifié, en fonction du deuxième capteur, qu'il existe un obstacle que la tondeuse à gazon n'est pas en mesure de franchir dans la région inefficace, la commande de la tondeuse à gazon de façon qu'elle contourne l'obstacle.

5. Procédé selon la revendication 2, dans lequel la tondeuse à gazon est en outre conçue pour enregistrer un trajet de tonte pendant la réalisation de la tonte, le trajet cible étant parallèle à un trajet de tonte situé à un emplacement périphérique de la région inefficace.

6. Procédé selon la revendication 4, comprenant en outre :
lorsque le nombre de fois où l'évitement d'obstacle est réalisé dans la région inefficace en fonction des informations du deuxième capteur dépasse une valeur prédéfinie, l'annulation de la région inefficace qui a été définie.

7. Procédé selon la revendication 6, comprenant en outre :
lorsque le nombre de fois où l'évitement d'obstacle est réalisé dans la région inefficace en fonction des informations du deuxième capteur dépasse la valeur prédéfinie, la commande de la tondeuse à gazon de façon qu'elle se déplace vers une limite prédéfinie, et l'annulation de la région inefficace qui a été définie ; ladite limite prédéfinie étant la limite de la région inefficace la plus proche de la tondeuse à gazon parmi les limites de ladite région inefficace, ou
lorsque le nombre de fois où l'évitement d'obstacle est réalisé dans la région inefficace en fonction des informations du deuxième capteur dépasse la valeur prédéfinie, la commande de la tondeuse à gazon de façon qu'elle revienne à un point de départ initial d'évitement d'obstacle en suivant un trajet déjà parcouru, et l'annulation de la région inefficace qui a été définie.

8. Procédé selon la revendication 1, comprenant en outre :
l'affichage d'une région tondue et d'une région vierge de trajet sur un dispositif terminal en vue d'une sélection par un opérateur au cours d'un processus de tonte, la région vierge de trajet indiquant une région non parcourue par la tondeuse à gazon.

9. Procédé selon la revendication 8, comprenant en outre :
la détermination d'une limite de la région vierge de trajet, et l'affichage de la limite de la région vierge de trajet sur le dispositif terminal en vue d'une sélection par l'opérateur.

10. Procédé selon l'une quelconque des revendications 1 à 9, comprenant en outre :
lorsqu'il est déterminé, en fonction des premières informations d'emplacement, que la région inefficace est située dans une région tondue, la commande de la tondeuse à gazon de façon qu'elle se dirige à nouveau vers la région inefficace et réalise une tonte complémentaire.

11. Procédé selon l'une quelconque des revendications 1 à 9, comprenant en outre :
lorsqu'il est déterminé, en fonction des premières informations d'emplacement, que la région inefficace se situe dans une région d'évitement actuelle, la commande de la tondeuse à gazon de façon qu'elle se dirige à nouveau vers un emplacement initial d'évitement d'obstacle de la région inefficace et réalise une tonte complémentaire.

12. Procédé selon l'une quelconque des revendications 1 à 11, dans lequel la région inefficace est définie par un dispositif terminal communiquant avec la tondeuse à gazon sur une carte d'une région cible.

13. Procédé selon l'une quelconque des revendications 1 à 12, dans lequel la région inefficace est ajoutée à la carte de la région cible grâce à une première commande d'ajout effectuée sur une interface d'affichage du dispositif terminal.

14. Appareil électronique, **caractérisé en ce qu'**il comprend : au moins un processeur (1301) et une mémoire (1302),
la mémoire (1302) contenant des instructions d'exécution informatique,
le ou les processeurs (1301) exécutant les instructions d'exécution informatique contenues dans la mémoire (1302) afin de permettre au(x) processeurs (1301) de réaliser le procédé selon l'une quelconque des revendications 1 à 13.

15. Support de stockage lisible par ordinateur, **caractérisé en ce que** le support de stockage lisible par ordinateur contient des instructions d'exécution informatique et, lorsque ces instructions d'exécution informatique sont exécutées par un processeur, le procédé selon l'une quelconque des revendications 1 à 13 est mis en œuvre.
